# EUROPEAN PATENT APPLICATION

(11) **EP 3 643 877 A1**
(43) Date of publication of application: **29.04.2020**
(21) Application number: 19203495.7
(22) Date of filing: 16.10.2019
(51) Int. Cl.: F01D 5/14, F01D 5/16, F04D 29/32, F04D 29/54, F04D 29/66

(54) **DUCTED PROPULSOR WITH AIRFOILS HAVING A LEADING EDGE WITH A DEFLECTED REGION**

(30) Priority: 22.10.2018 GB 201817175
(71) Applicant: Rolls-Royce plc, London N1 9FX (GB)
(72) Inventor: Namgoong, Howoong, Derby, Derbyshire DE24 8BJ (GB)
(74) Representative: Rolls-Royce plc

(57) **Abstract**

The present invention relates to gas turbine engines (10) comprising a turbofan (12) having a plurality of fan blades (131). Each fan blade (131) comprises a leading edge (133) and a leading edge zone (135) immediately downstream the leading edge (133). The leading edge zone (135) extends in a spanwise direction over the full length of the fan blade (131). The leading edge zone (135) comprises one or more deflected regions (145) forming a depression with a depth tapering in chordal direction so as to blend with the main body (137). The deflected regions (145) locally reduce the angle of attack between non-deflected regions (147). The deflected regions (145) extend from the leading edge (133) to between 1 % and 50%, more preferably between 5% and 25%, of the chordal extent of the fan blade (131). Thus, flow separation is mitigated reducing broadband noise and overall lift loss and drag.

## Description

The present invention relates to fluidfoils and engines incorporating fluidfoils.

Ducted fan gas turbine engines are known, in which a ducted propulsive fan is driven by a gas turbine engine core. Since a majority of the propulsive thrust of the engine is generated by the fan, fan efficiency is critical for overall engine efficiency. Furthermore, a significant quantity of noise is emitted from the fan in operation, and it is desirable to minimise this noise.

Patent publication EP 2759471 discloses a propeller rotor having one or more deflected regions for minimising flow separation at the tips. However, this prior design is optimised for open rotor propellers (in which no duct surrounds the rotor tips).

According to a first aspect of the invention there is provided a ducted propulsor comprising an aerofoil, the aerofoil comprising a plurality of aerofoil blades, each blade comprising a leading edge and a leading edge zone behind the leading edge extending spanwise over the full span of the blade, the aerofoil blade being enclosed within a duct, wherein the leading edge zone comprises one or more deflected regions which locally reduce the angle of attack of the aerofoil blade, wherein the deflected regions extend from the leading edge to between 1% and 50% of the chordal extent of the aerofoil.

When the aerofoil is in use, an area of the leading edge having a reduced angle of attack may increase the momentum of fluid approaching that area. In this way the distance from the leading edge at which flow separation occurs may be reduced. The increased momentum in the region of the deflected region may also entrain nearby flows, thereby reducing flow separation in regions of the leading edge zone that are conventional/non-deflected. By reducing the flow separation distance in advance of the leading edge, the wake caused by the fan may be reduced and so also the broadband noise produced. Further the decreased flow separation distance may also reduce overall lift loss and drag, improving efficiency. It may be for example that a slower fan speed than would otherwise be required would be sufficient to produce a given force. This may also have the additional benefit of further reducing noise. Furthermore, in the case of a ducted fan, it has been found that fan stall tends to be initiated by stall at the blade tips. By providing deflected regions that extend between 1% and 50% of the chordal extent of the fan blade, these tip vortices are minimised, allowing for greater fan working margin, and stability margin. This allows for a fan design with greater off-design efficiency, and greater fan pressure ratio than a conventional design. The deflected region will change the reattachment position of the separation bubble at high loading conditions and this will improve aerofoil stall flutter margin.

It is further noted that the deflected region may have a similar effect to an aerodynamic fence, blocking spanwise flow migration, thus reducing fluidfoil tip vortices.

Throughout the remainder of this document optional features of the, some or each deflected region are for simplicity (except where otherwise specified) indicated via discussion of a single deflected region. As will be appreciated however, features discussed in relation to a single deflected region may also be applied to additional or indeed all deflected regions.

The aerofoil may comprise one of a fan blade and a stator blade.

The deflected regions may extend from the leading edge to between 5% and 25% of the chordal extent of the aerofoil blade. It has been found that, in some cases, the reduction in tip vortices and increase in working margin and fan pressure ratio for a ducted aerofoil is greatest where the deflected regions extend between 5% and 25% of the chordal extent.

The fan blades may have a tip speed in excess of Mach 1 when the engine is operated at maximum take-off conditions. The disclosed arrangement has been found to be particularly beneficial for supersonic fan designs, since the disclosed arrangement will change the radial profile of the shock pattern and could increase the interaction of the shocks and weakens shock induced noise generation such as "buzzsaw" and rotor alone tone noise.

An inlet of the ducted propulsor may have a length to diameter ratio of between 0.2 and 0.4. It is desirable to reduce the length to diameter ratio of ducted fan propulsors to decrease fan nacelle weight and drag. However, such designs suffer from high noise, due to the short distance on which noise absorbing panels can be mounted, and also suffer from high inlet distortion where the aircraft is operated at high angles of attack, in high side winds at low speeds. This high inlet distortion can lead to uneven azimuthal fan loading distributions and local fan flow separation. The disclosed fan having deflected regions can solve this problem by reducing flow separation, and so allowing for a nacelle having a shorter inlet.

In some embodiments, the propulsor comprises a variable pitch mechanism configured to alter the pitch of the aerofoil blades in flight. When combined with a very short inlet (i.e. a length to diameter ratio of between 0.2 and 0.4), variable pitch fans may be particularly susceptible to inlet distortion. The disclosed propulsor arrangement reduces these inlet distortions, and thereby enables a variable pitch fan having a very short inlet.

In some embodiments the deflected region comprises a local modification to the surface contouring of the leading edge zone. It may therefore be possible to achieve the desired effect without attaching additional flow modifying components to the aerofoil blade.

In some embodiments the deflected region comprises a portion of the leading edge zone angled further towards the pressure surface of the aerofoil blade than non-deflected regions of the leading edge zone which extend spanwise to either side and/or between each deflected region. In this way the deflected region may define a scoop with an associated leading edge defining a reduced angle of attack when compared to surrounding areas of the leading edge zone.

In some embodiments the aerofoil blade has a consistent angle of attack in the non-deflected regions. The combination of deflected and non-deflected regions may produce a preferred compromise between different performance envelopes of the fan blade. The non-deflected regions may be optimised in the normal way (e.g. efficient force production for important areas of the performance envelope), while the deflected regions assist in managing fluid flow at the leading edge and performance in particular operating regimes.

In some embodiments there is no local chordwise extension of the leading edge associated with the deflected region. Likewise there may be no local chordwise retraction of the leading edge associated with the deflected region. In other words, when viewed in plan (i.e. from directly above the suction surface, or directly below the pressure surface), no undulations, extensions or indentations to the leading edge can be seen, i.e. the leading edge has a relatively straight profile when viewed in plan, and does not curve inwardly and outwardly to follow the deflected regions. Additionally or alternatively it may be that there is no local extension and/or retraction of the camber line associated with the deflected region. It may be for example that the curve of the leading edge along the span of the fan blade is maintained as it passes deflected and non-deflected regions of the leading edge zone. Additionally or alternatively it may be that a curve in the leading edge along the span of the fan blade remains positive in gradient rather than alternating between positive and negative.

In some embodiments the extent of the deflected region decreases from the leading edge through the leading edge zone. This may create a blend (which may be gradual) into a main body of the fan blade which extends behind the leading edge zone. In this way the deflected region may have the desired effect on fluid impinging on the leading edge without unduly impacting on the flow of fluid over the remainder of the fan blade main body.

In some embodiments the deflected region blends into a main body of the aerofoil blade extending behind the leading edge zone and disappears. It may be advantageous for the deflected region to blend completely rather than continue into and/or through the main body.

In some embodiments the depth of the deflected region tapers in one or both spanwise directions so as to blend with the respective non-deflected region of the leading edge zone. The deflected region may have a cross-section of substantially triangular form. The spanwise taper may be straight edged (with one consistent gradient or more than one gradient) or curved (convex, concave or a combination) or a combination of any of the above. A region of curved gradient may be particularly advantageous where the deflected and non-deflected regions meet.

In some embodiments the depth of the deflected region tapers in a chordwise direction from a maximum at the leading edge so as to blend with the main body of the fan blade. In this way the deflected region may define an upwardly orientated ramp for fluid passing the leading edge on the suction side of the fan blade in the area of the deflected region. The chordwise taper may be straight edged (with one consistent gradient or more than one gradient) or curved (convex, concave or a combination) or a combination of any of the above.

In some embodiments the spanwise width of the deflected region decreases in a chordwise direction from a maximum at the leading edge, through the leading edge zone, to no spanwise width at the interface of the leading edge zone with the main body. The deflected region may define a taper angle of between 1 and 60°, and preferably between 20° and 40°.

In some embodiments a pattern of deflected and non-deflected regions is provided spanwise along the leading edge zone. In some embodiments the pattern comprises alternating deflected and non-deflected regions.

The ducted propulsor may comprise a first aerofoil provided upstream of a second aerofoil, wherein each of the first and second aerofoils comprises a respective deflected region.

A deflected region of the second aerofoil may be located such that it does not intersect a streamline of any deflected region of the first aerofoil.

A deflected region of the second aerofoil may be located such that it intersects a streamline of a deflected region of the first aerofoil. The deflected region of the second aerofoil that intersects the streamline of the deflected region of the first aerofoil may comprise a different deflection angle relative to the deflection angle of the deflected region which streamline it intersects.

The ducted propulsor may comprise a plurality of aerofoil blades provided in a common radial plane. A deflected region of an aerofoil may be located such that it is provided in a different radial position to any deflected region of a neighbouring aerofoil in the same radial plane.

A deflected region of an aerofoil may be located such that it is provided in the same radial position as a deflected region of a neighbouring aerofoil in the same radial plane. The deflected region of the neighbouring aerofoil that is provided at the same radial position may comprise a different deflection angle.

According to a second aspect of the invention there is provided a gas turbine engine provided with one or more fan blades in accordance with the first aspect of the invention.

The skilled person will appreciate that a feature described in relation to any one of the above aspects of the invention may be applied mutatis mutandis to any other aspect of the invention.

Embodiments of the invention will now be described by way of example only, with reference to the figures, in which:
**Figure 1** is a sectional side view of a gas turbine engine
**Figure 2a** is a schematic plan view from a pressure surface side of a portion of fan blade according to an embodiment of the invention;
**Figure 2b** is a front view of the portion shown in Figure 2a;
**Figure 2c** shows section A-A in accordance with Figure 2a;
**Figure 2d** shows section B-B in accordance with Figure 2a;
**Figure 3a** shows a plan view from a pressuresurface side of a fan blade according to a second embodiment of the invention;
**Figure 3b** shows a portion of the fan blade of figure 3a;
**Figures 4a and 4b** show results of a computerised fluid simulation of a conventional fan blade not in accordance with the present invention and the fan blade of figures 3a and 3b respectively;
Figure 5 shows a cross-section side view of a fan blade and stator blades of a third embodiment of the invention; and
Figure 6 shows a front view of a fan of a fourth embodiment of the invention.

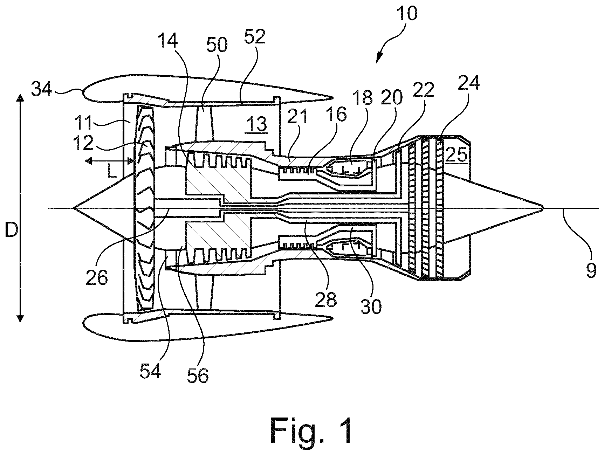

Referring to figure 1, a turbofan gas turbine engine is generally indicated at 10 and has a principal rotational axis 9. The engine 10 comprises a core engine having, in axial flow series, an air intake 11, an intermediate pressure compressor 14, a high-pressure compressor 16, combustion equipment 18, a high-pressure turbine 20, an intermediate pressure turbine 22, a low-pressure turbine 24 and a core exhaust nozzle 25. A core nacelle 21 generally surrounds the core engine and defines the intake 11 and nozzle 25. The engine 10 also comprises a fan 12 powered by the lower pressure turbine 24, and surrounded by a fan casing 22. The low pressure turbine 24 and fan 12 are interconnected by a low pressure shaft 26, the intermediate pressure compressor 16 and turbine 22 are interconnected by an intermediate pressure shaft 28, and the high pressure compressor 18 and turbine 20 are interconnected by a high pressure shaft 30. A bypass duct 13 is defined by the space between the fan casing 52 and core nacelle 21.

The fan casing 52 includes an inlet lip 34 provided at a forward end of the casing 52 which defines a leading edge of the casing 52 in forward flight. A distance between the inlet lip 34 and a leading edge of the fan 12 defines an inlet length L. A distance normal to the length L between tips of the fan blade at positions 180° apart defines a fan diameter D. A length to diameter ratio L/D is defined by dividing L by D. In this case, the length to diameter ratio L/D is between 0.2 and 0.4. Such a relatively low L/D is desirable to reduce overall engine length and drag. However, inlet distortions may be encountered at such L/D ratios, which may result in fan turbulence, and so reduced fan performance. The present invention provides a fan which reduces fan turbulence, and so increases performance, and so is particularly (though not exclusively) of use for engines having low L/D inlets.

The gas turbine engine 10 works in a conventional manner so that air entering the intake 11 is accelerated and compressed by the intermediate pressure compressor 14 and directed into the high-pressure compressor 16 where further compression takes place. The compressed air exhausted from the high-pressure compressor 16 is directed into the combustion equipment 18 where it is mixed with fuel and the mixture combusted. The resultant hot combustion products then expand through, and thereby drive the high-pressure, intermediate pressure and free power turbines 20, 22, 24 before being exhausted through the nozzle 25 to provide some propulsive thrust. The fan 12 normally provides the majority of the propulsive thrust. Typically, the fan 12 tips operate at speeds greater than Mach 1 during operation at maximum take-off thrust. Optionally, the fan 12 may comprise a variable pitch fan, in which the fan blades are pivotable about their span axis to alter their pitch in flight.

As will be understood, Mach 1 represents the speed of sound under ambient conditions. Similarly, maximum take-off thrust relates to a thrust produced where the engine is operated at maximum fan speed (N1), i.e. 100% of rated N1 speed at sea-level under International Standard Atmospheric Conditions (ISA).

The fan 12 comprises a plurality of fan blades 31, which rotate in use to generator thrust. The fan 12 further comprises a plurality of Outlet Guide Vanes (OGVs) 50, which are axially spaced from the fan blades 31, and extend between the core nacelle 21 and fan casing 52. A plurality of core inlet vanes 54 are also provided downstream of the fan blades 31, and extend between the core nacelle 21 and an inner annulus 56 of the engine core. In this case, the inner annuls 56 and core nacelle 21 define a duct which contains the core inlet vanes 54.

Similarly, each compressor 14, 16 comprises an axial flow compressor comprising alternating rows of rotor and stator stages. Each rotor and stator stage comprises a plurality of rotor and stator blades (not shown).

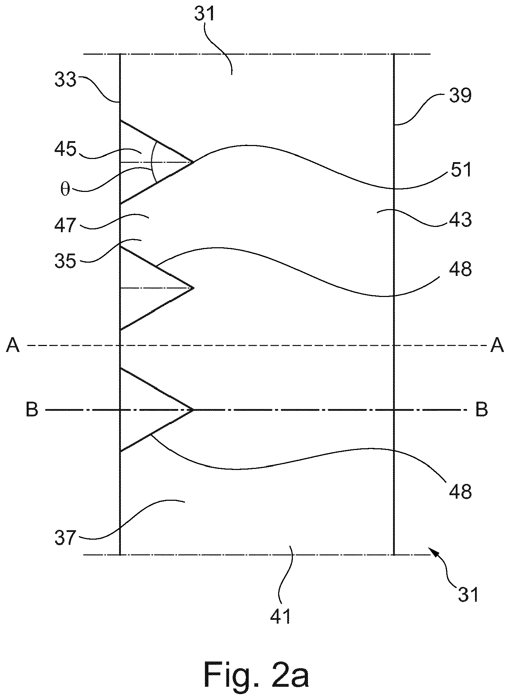

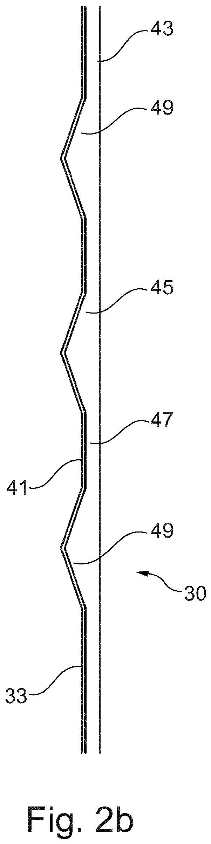

Referring now to Figures 2a and 2b a portion of a fan blade 31 of the fan 12 is shown. The fan blade 31 has a leading edge 33, a leading edge zone 35 immediately behind the leading edge 33, a main body 37 immediately behind that and a trailing edge 39. The leading edge zone 35 is positioned behind the leading edge 33 (along the camber line) and extends spanwise for the full length of the fan blade. The leading edge zone 35 may therefore be considered to comprise a spanwise band behind the leading edge 33. The fan blade has a pressure surface 41 and a suction surface 43.

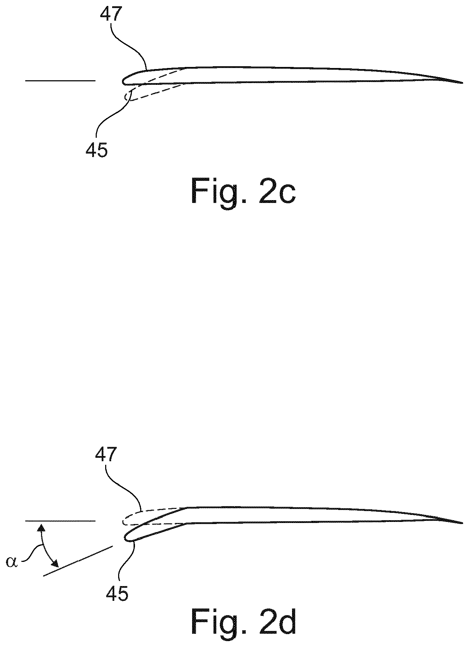

Within the leading edge zone 35 are deflected regions 45 and non-deflected regions 47. The deflected 45 and non-deflected regions 47 form an alternating repeating pattern in the spanwise direction. The deflected regions 45 generally extend in a chordwise direction (i.e. in a direction extending in a line from the leading edge 33 to the trailing edge 39). The deflected regions 45 extend for between 1% and 50% of the chord from the leading edge 33 to the trailing edge 39. In the embodiment shown in the figures 2a to 2d, the deflected regions 45 extend for approximately 25% of the chord, i.e. 25% of the distance from the leading edge 33 to the trailing edge 39. As can be seen from figure 2d, the deflected region 45 defines a deflection angle α, defined by an angle formed by the deflected region 45 relative to the chord line of the aerofoil in a plane orthogonal to the chord line.

The non-deflected regions 47 contribute to the formation of a standard fan blade cross-sectional profile defined by the leading edge 33, non-deflected region 47, main body 37 and trailing edge 39. This profile (A-A in Figure 2a) is shown in Figure 2c (with a cross-section at the deflected region 35 corresponding to line B-B in Figure 2a shown in phantom). In the non-deflected regions 37 the angle of attack is consistent (the same).

Where however deflected regions 45 are provided, the standard fan blade cross-section is modified by a change in the contours of the pressure 41 and suction 43 surfaces. The deflected region 45 reduces the angle of attack of the fan blade 31 locally (local to the deflected region 45 in contrast to the higher angle of attack in the non-deflected regions 47). This is achieved via angling the deflected region 45 of the leading edge zone 35 further towards the pressure surface 41 of the fan blade 31 than non-deflected regions 47 of the leading edge zone 35. This angling gives the deflected region 45 a depth and consequently the leading edge 33 in the area of the deflected region 45 is below the line created by the leading edge 33 in the area of the non-deflected regions 47. It should be noted however that there is no local chordwise extension of the fan blade 31 in the area of the deflected region 45. Instead the line of the leading edge 33 is maintained throughout its vertical deflection.

Each deflected region 45 is also provided with several tapering features. The depth of the deflected region 45 (i.e. the vertical distance between the suction surface 43 within a deflected region 45 and the suction surface 43 at a deflection interface 48 between a deflected region 45 and a non-deflected region 47) tapers in both spanwise directions so as to blend with the respective non-deflected region 47 to either side. The spanwise taper forms an angle θ of between 5 and 160°, and preferably between 10 and 30°. Consequently the deflected region forms a valley having a substantially triangular cross-sectional shape. The spanwise tapers form two side walls 49, each having a consistent gradient. The depth of each deflected region 45 also tapers in a chordwise direction from a maximum at the leading edge 33 so as to blend with the main body 37 of the fan blade 31. This gives the deflected regions 45 an upwards ramp. Further the spanwise width of each deflected region 45 (i.e. the distance between deflection interfaces 48 at either side of the deflected region 45) decreases in a chordwise direction from a maximum at the leading edge 33, through the leading edge zone 35 and disappears at a main body interface 51 of the leading edge zone 35 with the main body 37.

As a consequence of the various tapering features the extent of the deflected region 45 may be said to decrease from the leading edge 33 through the leading edge zone 35, such that it blends into the main body 37 and disappears.

While the invention has been described in relation to fan blades, it will be understood that the invention applies equally to other ducted propulsor blades, such as the OGV, as well as compressor blades and stator blades, which are similarly house in a duct (the compressor casing).

It has been found that fluid that is incident on the deflected region 45 has a higher momentum relative to the undeflected regions, and therefore tends to delay flow separations near the leading edge 33. Furthermore the higher momentum fluid tends to entrain surrounding fluid and increase its momentum even in fluid incident on other parts of the leading edge 33 and leading edge zone 35. The deflected regions 45 therefore reduce the size of the vortices/wakes produced by the fan blade 31, consequently reducing the noise it produces. Further the deflected region acts like an aerodynamic fence, partially blocking spanwise flow of fluid and therefore reducing fan blade tip vortices (which are inefficient and may add to noise production especially where ingested by a downstream rotor or stator).

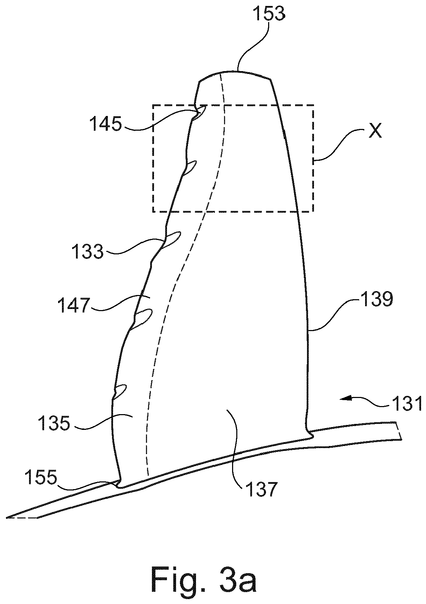

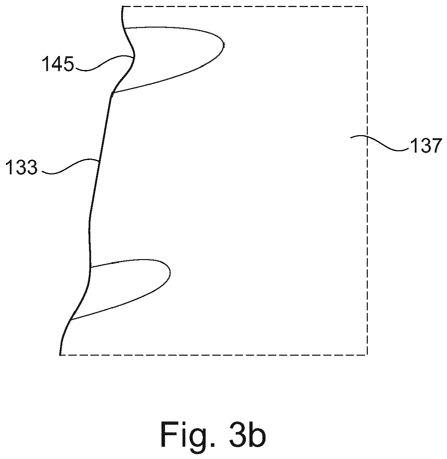

Figures 3a and 3b show plan views from a suction side of a second fan blade 131 of a fan 112 in accordance with the present invention. The fan blade 131 similarly comprises deflected regions 145, which are deflected relative to non-deflected regions 147. provided within a leading edge zone 135 adjacent a leading edge 133. The deflected regions 145 are similar to the regions 45 of the first embodiment, but extend to a smaller extent toward the trailing edge 139, and so only extend for approximately 5% of the chordal extent of the fan blade 131.

The deflected regions at a tip 153 have a greater chordal extent than the deflected regions at a root 155. In general, it has been found to be advantageous to continually reduce the chordal extent of the deflected regions 145 toward the root of the blade, compared to the tip. This has been found to be the case particularly for aerofoils where the loading increases in a spanwise direction towards the tip relative to the root (i.e. where the aerodynamic loading at the tip is greater than at the root). Such a load distribution is typical for rotating blades such as compressor and fan blades, but is unusual for static aerofoils such as wings.

A total of five deflected regions 145 are provided, distributed along the leading edge 133 of the blade 131. The inventor has found that deflected regions towards the tip can reduce fan wake at the tip, and so increase fan efficiency. On the other hand, deflected regions at the tip can also increase core mass flow, and improve flow to the downstream compressor blades. Consequently, at least one deflected region is provided at a position radially inwardly of a compressor inlet lip of the engine core.

The fan blade 131 in figure 3a comprises a carbon fibre composite main portion 137 and a titanium alloy leading edge zone 135 affixed to the carbon fibre composite main portion 137. The deflected regions 145 are provided as part of the titanium alloy leading edge zone 135, and in this embodiment, do not extend into the carbon fibre composite main portion 137. Consequently, the deflected regions 145 can be formed by metallurgical methods such as pressing and superplastic forming.

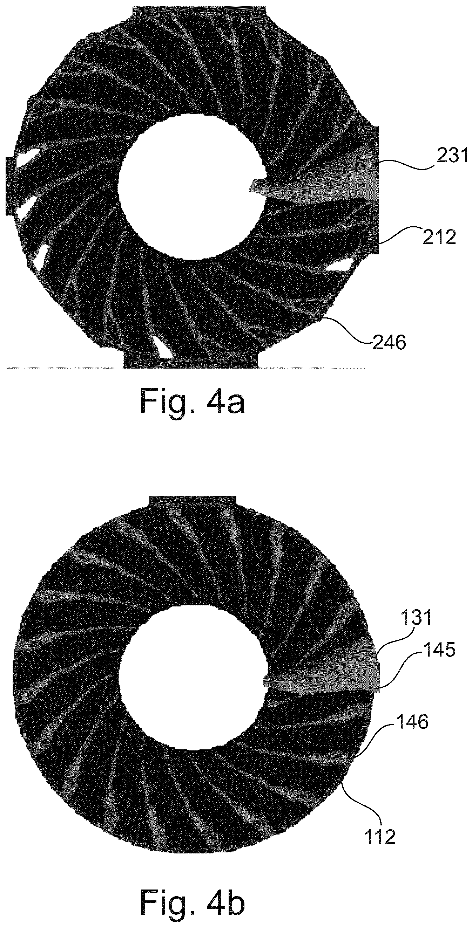

Figured 4a and 4b show simulated fluid flows of a fan 212 having fan blades 231 not in accordance with the present invention (i.e. without deflected regions), and the fan 112 of figures 4a and 4b respectively. The blades are rotating at relatively low speed, i.e. in conditions in which turbulence is likely. Such conditions are typically encountered during operation of the engine close to idle thrust, which may be encountered during aircraft descent.

As can be seen, in both cases, regions of turbulence 246, 146 can be seen. However, in the fan 112, the regions of turbulence 146 are much smaller than the regions 246 for the fan 212, and are less intense. Consequently, the deflected regions 145 are shown to reduce turbulence, and so reduce noise and increase efficiency in a ducted fan engine. The inventor has also found that the disclosed arrangement changes the radial profile of the wake and will induce phase shifts when the wake will interact with the downstream blade. The de-phase of the wake and blade interaction will reduce the tonal interaction noise and blade forced response.

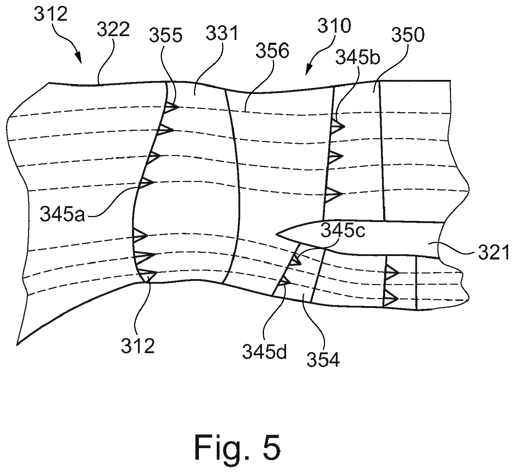

Figure 5 shows a cross-sectional side view of part of a third gas turbine engine 310. The gas turbine engine 310 is similar to the engine 10, and comprises a fan 312. Again, the fan 312 comprises a plurality of fan blades 331 which are provided in the same radial plane, as well as a plurality of outlet guide vanes (OGVs) 350, and a plurality of core inlet vanes 354.

The fan 312 comprises a fan casing 322 which encloses the fan blades 331 and OGVs 350, and an engine core nacelle 321, which encloses the core inlet vanes 354.

Each of the fan blades 331, OGVs 350 and core inlet vanes 354 comprise a plurality of deflected regions 345a, 345b, 345c at their respective leading edges. These are arranged relative to one another to minimise noise, as described in further detail below.

As shown in figure 5, a plurality of in use "stream lines" can be defined. Stream lines are notional lines followed by airflow in use at a given radial and circumferential position. The direction and position of streamlines can be determined through smoke visualisation in testing, or by modelling using techniques such as Computer Fluid Dynamics (CFD), or by other conventional techniques known to the skilled person.

A centre point 355 of each deflection 345a on the leading edges of the fan blades 331 defines a respective stream line 356 originating from that deflection 345a. As can be seen, each respective stream line 356 originating from that deflection 345a intersects with a leading edge of an immediately downstream component, such as the OGVs 350. The deflected regions 345b of the downstream component (such as the OGVs 350) are radially positioned such that they do not intersect with the streamlines 356 from deflected regions 345a of upstream components (such as the fan blades 331). Advantageously, any turbulent flow generated by the deflections 345a does not interact with the downstream deflected regions 345b, thereby reducing noise generation. Furthermore, the sound generated by the deflected regions 345a, 345b are "de-phased", thereby further reducing noise. Consequently, a relatively low noise fan system is defined.

Similarly, at least some of the deflected regions 345c of the inlet guide vanes 354 may be radially spaced from the respective stream lines 356 originating from the fan 331.

In some cases, one or more deflected regions 345d of downstream components (such as the engine inlet guide vane 354) may be located on a streamline 356 of an upstream deflected region 345a. In such a case, the degree of deflection (i.e. the deflection angle) of the upstream and downstream deflected regions 345a, 345d may vary, to ensure that the regions are out of phase, to thereby reduce noise generated by the regions 345a, 345d.

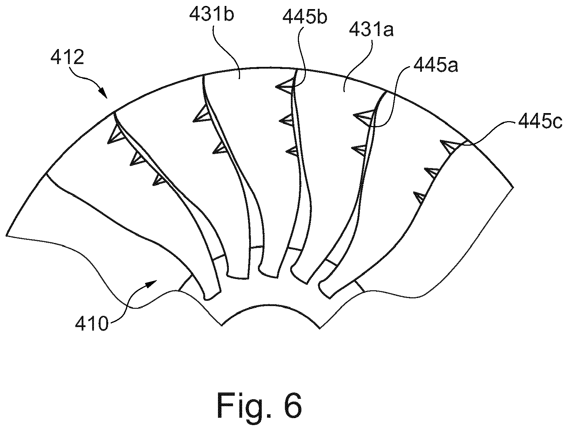

Figure 6 shows a front view of a fan 412 of a fourth gas turbine engine 410. The fan 412 comprises a plurality of fan blades 431, which each included a plurality of deflected regions 445, which are spaced in a radial direction (i.e. along a span of the respective blade 431).

As can be seen from figure 6, the radial position of the deflected regions 445 differs from its neighbouring blade 431. In particular, the radial position of a deflected region 445a of a first blade 431a is radially offset from a deflected region 445b on a neighbouring blade 431b, such that an arc swept by each deflected region 445a does not intersect an arc swept by the deflected region 445b of the neighbouring blade 431b.

In a similar manner to the third embodiment, where two neighbouring blades 431a, 431b have deflected regions 445a, 445c located at the same radial position, the deflection angles are varied to ensure that the two deflected regions 445a, 445c are out of phase with one another.

Consequently, again, noise is minimised. In particular, such an arrangement is thought to reduce "buzz-saw noise", which is a low frequency audible tone noise generated by ducted fans at certain shaft speeds. Such a system is also though to reduce blade flutter, i.e. blade oscillations caused by aero-elastic effects.

It will be understood that the invention is not limited to the embodiments above-described and various modifications and improvements can be made without departing from the various concepts described herein. For example, the deflected region could be provided on a stator such as a fan outlet guide vane of a ducted fan. Similarly, the deflected region could be provided as part of a different ducted rotor, such as a compressor rotor or stator blade of a core of a gas turbine engine, the compressor rotor / stator blade being surrounded by a duct. Any of the features may be employed separately or in combination with any other features and the invention extends to and includes all combinations and sub-combinations of one or more features described herein in any form of fan blade or gas turbine engine.

## Claims

1. A ducted propulsor comprising an aerofoil, the aerofoil comprising a plurality of aerofoil blades, each blade comprising a leading edge and a leading edge zone behind the leading edge extending spanwise over the full span of the blade, the aerofoil being enclosed within a duct, wherein the leading edge zone comprises one or more deflected regions which locally reduce the angle of attack of the aerofoil, wherein the deflected regions extend from the leading edge to between 1% and 50% of the chordal extent of the aerofoil.

2. A propulsor according to claim 1, wherein the aerofoil comprises one of a fan blade and a stator blade.

3. A propulsor according to claim 1, wherein the deflected regions extend from the leading edge to between 5% and 25% of the chordal extent of the aerofoil.

4. A propulsor according to claim 2, wherein the fan blades have a tip speed in excess of Mach 1 when the engine is operated at maximum take-off conditions.

5. A propulsor according to any of the preceding claims, wherein an inlet of the ducted propulsor has a length to diameter ratio of between 0.2 and 0.4.

6. A propulsor according to claim any of the preceding claims, where the deflected region comprises a local modification to the surface contouring of the leading edge zone.

7. A propulsor according to any of the preceding claims where the deflected region comprises a portion of the leading edge zone angled further towards the pressure surface of the fan blade than non-deflected regions of the leading edge zone which extend spanwise to either side and/or between each deflected region.

8. A propulsor according to claim 7 where the aerofoil has a consistent angle of attack in the non-deflected regions.

9. A propulsor according to any preceding claim where there is no local chordwise extension of the leading edge associated with the deflected region.

10. A propulsor according to any preceding claim where there is no local chordwise retraction of the leading edge associated with the deflected region.

11. A propulsor according to any preceding claim where the extent of the deflected region decreases from the leading edge through the leading edge zone.

12. A propulsor according to any preceding claim where the deflected region blends into a main body of the aerofoil extending behind the leading edge zone and disappears.

13. A propulsor according to claim 12 where the depth of the deflected region tapers in a chordwise direction from a maximum at the leading edge so as to blend with the main body of the aerofoil.

14. A propulsor according to claim 12 or claim 13 where the spanwise width of the deflected region decreases in a chordwise direction from a maximum at the leading edge, through the leading edge zone, to no spanwise width at the interface of the leading edge zone with the main body.

15. A propulsor according to claim 7 claim 8 or any of claims 9 to 14 when dependent through to claim 7 where the depth of the deflected region tapers in one or both spanwise directions so as to blend with the respective non-deflected region of the leading edge zone.

16. A propulsor according to any preceding claim, wherein the ducted propulsor comprises a first aerofoil provided upstream of a second aerofoil, each of the first and second aerofoils comprising a respective deflected region, and wherein a deflected region of the second aerofoil is located such that it does not intersect a streamline of any deflected region of the first aerofoil.

17. A propulsor according to any preceding claim, wherein the ducted propulsor comprises a first aerofoil provided upstream of a second aerofoil, each of the first and second aerofoils comprising a respective deflected region, and wherein a deflected region of the second aerofoil is located such that it intersects a streamline of a deflected region of the first aerofoil, and wherein the deflected region of the second aerofoil that intersects the streamline of the deflected region of the first aerofoil comprises a different deflection angle relative to the deflection angle of the deflected region which streamline it intersects.

18. A propulsor according to any of the preceding claims, wherein the ducted propulsor comprises a plurality of aerofoil blades provided in a common radial plane, and wherein a deflected region of an aerofoil is located such that it is provided in a different radial position to any deflected region of a neighbouring aerofoil in the same radial plane.

19. A propulsor according to any of the preceding claims, the ducted propulsor comprises a plurality of aerofoil blades provided in a common radial plane, and wherein a deflected region of an aerofoil is located such that it is provided in the same radial position as a deflected region of a neighbouring aerofoil in the same radial plane, and wherein the deflected region of the neighbouring aerofoil that is provided at the same radial position comprises a different deflection angle.
